# EUROPEAN PATENT APPLICATION

(11) **EP 1 826 950 A1**
(43) Date of publication of application: **29.08.2007**
(21) Application number: 06425130.9
(22) Date of filing: 28.02.2006
(51) Int. Cl.: H04L 12/28

(54) **Dynamic selection of digital transmission protocol over IGMP snooping networks. IP-multicast transimssion band optimization according to IEEE 802.16**

(71) Applicant: Gomedia Srl., 10100 Turin (IT); Adalia Holding Srl., 11911 Talinn (EE)
(72) Inventor: Gaetano, Morena, 10093 Collegno (IT); Monasterolo, Paolo, 10092 Beinasco (IT)

(57) **Abstract**

IP-Multicast services over IGMP snooping networks provide a single burst profile for every Subscriber Stations (SSes) belonging to the same host group. Maximum number of final users connected at the same time to the same Base Station depends on transmission protocol type selected. DPS (Dynamic Protocol Selection) algorithm allows to define the best protocol according to current conditions. It means to use more better transmission band. A greater number of final users will be connected at the same time to the same Base Station.

## Description

Broadband links over radio channel, according to IEEE 802.16d and IEEE 802.16e standard, allow to connect a large numbers of final users of internet services like IP-TV service for instance.

Broadband links supply their services to a user groups. Number of the users changes dynamically. It depends on type of service demanded. Under these work conditions is strong necessary to optimize use of transmission band in order to maximize number of contemporaneous users.

WiMAX link works, according to IEEE 802.16d and IEEE 802.16e standard, on IGMP networks using snooping method.

Step by step, WiMAX link allows to identify compounds made of homogeneous users. In other words it is possible to know type of service routed on every host interface requesting to belong to the same group.

For each Base Station (BS) and one possible service delivered to itself WiMax link allows to know how many Subscriber Station (SS) are connected to it at the same time.

When a Subscriber Stations stays in one group it can generate two primary events: request to belong to group; request to leave group

IGMP network generates following message:
- membership query (from specific or generic router);
- membership report (from host)
- leave group (from host)

Through above messages it is possible to know list of current group members. As well as it is possible to know transmission quality level through single burst profile came from each Subscriber Stations.

For unicast transmission the burst profile in use is negotiated between the BS and every SS

For multicast transmission, typical of WiMAX link, a single burst profile should be used for every SS belonging to the same host group.

In order to optimize bandwidth usage and availability of service, the BS shall monitor the received transmission quality of every SS belonging to same host group and define the downlink burst profile of a specific IP multicast transmission.

Transmission protocol is dynamically selected by DPS (Dynamic Protocol Selection) algorithm, subject of current patent pending.

DPS screens the best applicable protocol at that moment starting from following priority list:
1. 64QAM ¾
2. 64QAM 2/3
3. 16QAM ¾
4. 16QAM ½
5. QPSK ¾
6. QPSK ½
7. BPSK ½

64QAM ¾ is the first protocol of the list. It allows to allocate maximum number of radio channels over the transmission bandwidth. Vice versa BPSK ½. is the last protocol of the list.

Type of protocol applies according to current quality of service of one SS . Then it is necessary to define a percentage of stations that have got equal quality of service at the same time.

Percentage like that allows to define unique protocol, named CPM (Common Protocol Mode), for all SS belonging to the same group.

DPS_R (Dynamic Protocol Selection Rate) parameter defines percentage of stations that together will have equal quality of service in order to apply CPM (Common Protocol Mode) to them. DPS_R accepts value from 1 to 100. CPM, selected from above priority list, will be apply to every SS.

90 is DPS_R default value. Nevertheless should be possible to define an appropriate value according to logistic and environmental working conditions of the MAN (Metropolitan Area Network)

CPM definition allows to optimize transmission bandwidth usage and availability of service because the most efficient protocol is in use according to real system conditions.

DPS (Dynamic Protocol Selection) algorithm is intended as program able to control IP-multicast transmission. So it isn't important to define OSI level, type of transport (IPV4 - V6 etc.) or type of service in use. DPS algorithm covers all cases. It is just request to works over IGMP snooping networks using IP-multicast transmission according to IEEE 802.16d, IEEE 802.16e and future evolutions.

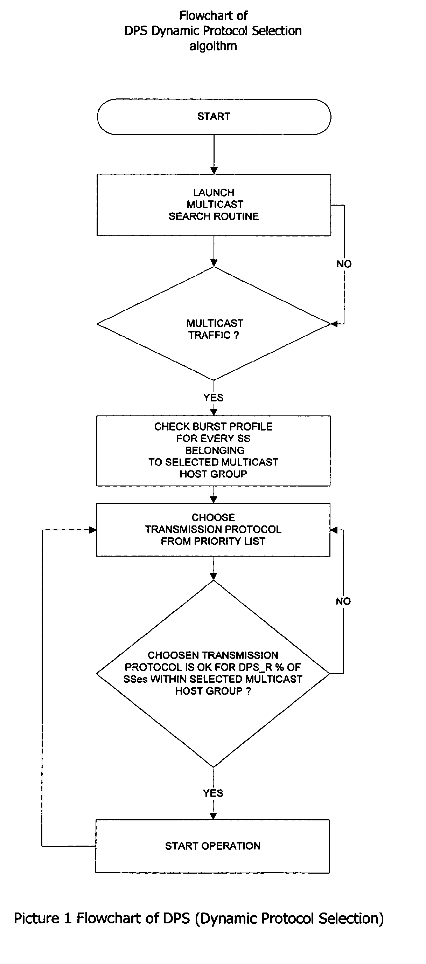

## Claims

1. **Subject of current patent pending is DPS (Dynamic Protocol Selection) algorithm. DPS algorithm optimizes bandwidth usage and availability of service over IGMP snooping networks using IP-multicast transmission according to IEEE 802.16d, IEEE 802.16e standard and future evolutions.**
DPS algorithm is able to determinate a unique compression protocol to apply to Subscribe stations connected to one Base station at the same time. DPS algorithm screens the best applicable compression protocol starting from a compression protocol priority list. Priority list is sorted from the most to the less optimized protocol.
DPS algorithm allows to optimize bandwidth usage according to available compression protocol priority list. The introduction of Dynamic Protocol Selection allows a bandwidth usage impossible up to now. It means to accept more high user numbers in comparison with IP-Multicast transmissions handled without DPS algorithm.
DPS algorithm even though following 802.16 standard (802.16d and 802.16e versions included) will work with new future evolutions too without change how it works.
Up to now DPS algorithm will work with new future protocols too as it takes transmission protocol from a priority list without to go deeply into a their characteristics. It is just necessary to update priority list.
DPS (Dynamic Protocol Selection) algorithm is intended as program able to control IP-multicast transmission. So it isn't important to define OSI level, type of transport (IPV4 - V6 etc.) or type of service in use. DPS algorithm covers all cases. It is just request to works over IGMP snooping networks using IP-multicast transmission according to IEEE 802.16d, IEEE 802.16e and future evolutions.
Consequently it is claiming DPS algorithm independently from type of transmission protocol and transmission transport. IGMP snooping networks are only request eventually their future evolutions
